# EUROPÄISCHE PATENTSCHRIFT

(11) **EP 0 365 629 B1**
(45) Veröffentlichungstag und Bekanntmachung des Hinweises auf die Patenterteilung: **01.09.1993**
(21) Anmeldenummer: 89904071.1
(22) Anmeldetag: 31.03.1989
(51) Int. Cl.: B60T 8/40, B60T 8/44, B60T 13/52

(54) **BREMSDRUCKREGELVORRICHTUNG**
BRAKING PRESSURE REGULATING SYSTEM
DISPOSITIF DE REGLAGE DE LA PRESSION DES FREINS

(30) Priorität: 09.05.1988 DE 3815768; 09.05.1988 DE 3815769
(43) Veröffentlichungstag der Anmeldung: 02.05.1990
(73) Patentinhaber: ITT Automotive Europe GmbH, 60488 Frankfurt (DE)
(72) Erfinder: BURGDORF, Jochen, D-6050 Offenbach-Rumpenheim (DE); REINARTZ, Hansdieter, D-6000 Frankfurt/Main 50 (DE); STEFFES, Helmut, D-6234 Hattersheim 3 (DE); VOLZ, Peter, D-6100 Darmstadt (DE)
(86) Internationale Anmeldenummer: EP8900347
(87) Internationale Veröffentlichungsnummer: WO8910862

(56) Entgegenhaltungen:
- DE-A- 2 044 790
- DE-A- 3 413 430
- DE-A- 3 420 666
- DE-A- 3 731 603
- DE-C- 3 226 579
- FR-A- 2 446 964
- GB-A- 2 103 320
- GB-A- 2 145 177
- GB-A- 2 149 035
- GB-A- 2 170 287
- GB-A- 2 184 506
- GB-A- 2 193 771
- GB-A- 2 201 743
- US-A- 4 365 538

## Beschreibung

Die Erfindung betrifft eine Antiblockierregelvorrichtung (ABS-Vorrichtung), für Kraftfahrzeuge mit einem Hauptzylinder, mit Radzylindern, mit mindestens einer Pumpe zur Positionierung mindestens eines Kolbens des Hauptzylinders, mit einem Druckmodulator, der den Druck in den Radzylindern während des Regelmodus moduliert, und einem elektronischen Regler, der Radsensorsignale zu Stellsignalen für die Durchlaß- und Sperrventile des Druckmodulators verarbeitet, mit einem Bremskraftverstärker, bestehend aus Verstärkerzylinder und Verstärkerkolben, wobei der Verstärkerkolben in Wirkverbindung mit dem Bremspedal steht.

Antiblockiersysteme finden in immer größerer Stückzahl Anwendung in der Kraftfahrzeugindustrie, dabei werden bei bestimmten Kategorien dieser Antiblockiersysteme Hydraulikpumpen zur Erzeugung eines Hilfsdrucks im Regelmodus eingesetzt. Eine derartige Antiblockiervorrichtung wird beispielsweise in der deutschen Patentanmeldung P 37 31 603.6 (veröffentlicht am 19.05.88) beschrieben.

In dieser Patentanmeldung wird eine Bremsanlage, insbesondere für Kraftfahrzeuge, mit einem Hauptzylinder, Radzylindern und einer Vorrichtung zur Antiblockierregelung vorgestellt. Bei dieser Bremsanlage wird im Regelmodus zur Positionierung des Kolbens des Hauptzylinders in einer gewünschten Position eine Druckmittelquelle, insbesondere eine Pumpe, vorgesehen, deren Fördervolumen variierbar ist, die durch eine hydraulische Leitung mit dem Hauptzylinder verbunden ist, und die durch ihr Fördervolumen den Kolben positioniert.

Wie aus der oben genannten älteren Patentanmeldung ersichtlich, wird angestrebt, daß der Arbeitskolben in eine Soll-Position gelangt, die eine, in Bezug auf die Ruhelage des Kolbens, vorgeschobene Position ist.

Der Erfindung liegen folgende Aufgaben zugrunde:
Es soll erreicht werden, daß auf besonders einfache Weise während des ABS- oder ASR-Modus das Bremspedal vor seiner Ausgangsstellung positioniert wird. Für die gewünschte Position des Bremspedals vor seiner Ausgangsstellung ist die Position des Druckstangenkolbens des Hauptzylinders maßgebend.

Es gehört weiterhin zu den Aufgaben der Erfindung, eine Vorrichtung zu schaffen, bei der der Hub des Druckstangenkolbens durch einen Schalter festgelegt wird, der die Baulänge des gesamten Aggregats, bestehend aus Unterdruckbremskraftverstärker und Hauptzylinder, nicht vergrößert.

Die gestellten Aufgaben werden erfindungsgemäß dadurch gelöst, daß ein Zugkraft übertragendes Element vorgesehen ist, der mit dem Verstärkerkolben verbunden ist und einen Schalter betätigt, der die Pumpe, über den elektronischen Regler, steuert.

Eine andere erfindungsgemäße Lösung, bei der der Verstärkerkolben einen Membranteller sowie eine Rollmembran umfaßt, besteht darin, daß der Verstärkerzylinder, der Membranteller und die Rollmembran als Teile eines Wegschalters für die Steuerung der Pumpe, über den elektronischen Regler, ausgebildet sind.

In weiterer Ausgestaltung der Erfindung wird vorgeschlagen, daß die Pumpe durch einen elektrischen Antriebsmotor antreibbar ausgebildet ist, dessen Drehzahl durch den Schalter steuerbar ist.

Eine besonders einfache Ausgestaltung der Erfindung besteht darin, daß der Schalter als Endschalter ausgebildet ist, der die Pumpe einschaltet, nachdem der Verstärkerkolben eine bestimmte Strecke in Richtung Bremsbetätigung zurückgelegt hat.

Bei einem bevorzugten Ausführungsbeispiel wird ausgegangen von einer Antiblockierrregelvorrichtung mit einem pneumatischen Bremskraftverstärker, dessen Verstärkerkolben einen Membranteller, der durch eine Membran mit dem Gehäuse bewegbar verbunden ist, umfaßt. Dabei ist vorgesehen, daß das Element als ein Bowdenzug ausgebildet ist, dessen Seele am Membranteller befestigt ist.

Eine besonders einfache Verkörperung der Erfindung besteht darin, daß der Schalter durch einen von der Seele des Bowdenzugs bewegbaren Körper betätigbar ist, der eine Schaltrampe aufweist, die nach Überwindung einer bestimmten Strecke den Schalter betätigt.

Eine besonders einfache Bauweise ergibt sich dadurch, daß im Gehäuse ein mechanischer Grenztaster mit Rollenhebel vorgesehen ist und ein elektrisches Signal für die Steuerung der Pumpe auslöst.

Es wird weiterhin vorgeschlagen, daß im Verstärkerzylinder ein Magnetgrenztaster mit Reedkontakt, vorgesehen ist, der durch die mindestens in einem Teilbereich magnetisierte oder mit einem magnetisierten Material versehene Rollmembran betätigbar ist.

In einem weiteren Ausführungsbeispiel wird vorgeschlagen, daß im Verstärkerzylinder ein fotoelektrischer Schalter, z. B. in Form einer Lichtschranke, vorgesehen ist, der von der Rollmembran betätigbar ist, oder daß eine Reflexionslichtschrankenvorrichtung vorgesehen ist und daß die Rollmembran zumindest teilweise als Reflektor ausgebildet ist.

Die Erfindung kann weiterhin dadurch verkörpert werden, daß im Verstärkerzylinder ein induktiver Sensor vorgesehen ist, der bei Annäherung der Rollmembran ein elektrisches Signal auslöst. In einer alternativen Ausführungsform wird ein kapazitiver Sensor vorgeschlagen.

Der Membranteller des Bremskraftverstärkers kann als Teil eines Wegschalters in der Form herangezogen werden, daß im Verstärkerzylinder ein Näherungssensor vorgesehen ist, der die Position des Membrantellers abtastet. Dabei kann ein induktiver Näherungsschalter oder ein kapazitiver Näherungsschalter eingesetzt werden, die durch die Näherung des Membrantellers betätigbar sind.

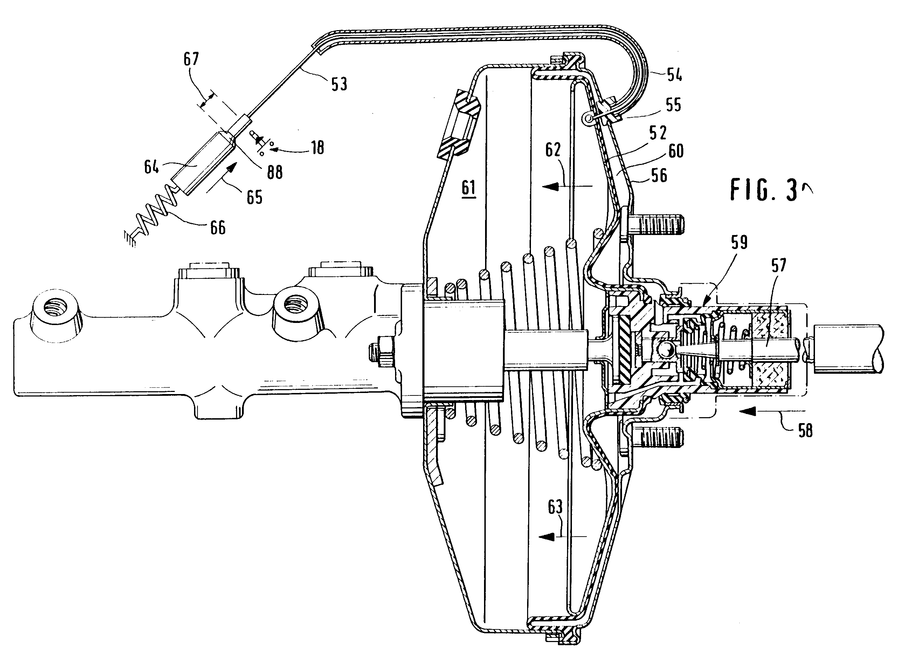

Wie insbesondere anhand des Ausführungsbeispiels gemäß Fig. 3 ersichtlich, baut das Gesamtgerät, bestehend aus Unterdruckverstärker und Tandemhauptzylinder nicht länger als Geräte herkömmlicher Bauart.

Weitere Einzelheiten der Erfindung sind der folgenden Beschreibung eines Ausführungsbeispiels zu entnehmen.

Es zeigt:
- Fig. 1: in schematischer Darstellung eine Antiblockiervorrichtung;
- Fig. 2: eine Antiblockiervorichtung mit einem Unterdruckbremskraftverstärker;
- Fig. 3: eine erste Ausführungsform eines bei der Antiblockierregelvorrichtung nach Fig. 2 verwendeten Unterdruckbremskraftverstärkers.
- Fig. 4: eine zweite und eine dritte Ausführungsform
und
- Fig. 5: des bei der Antiblockierregelvorrichtung nach Fig. 2 verwendeten Unterdruckbremskraftverstärkers.

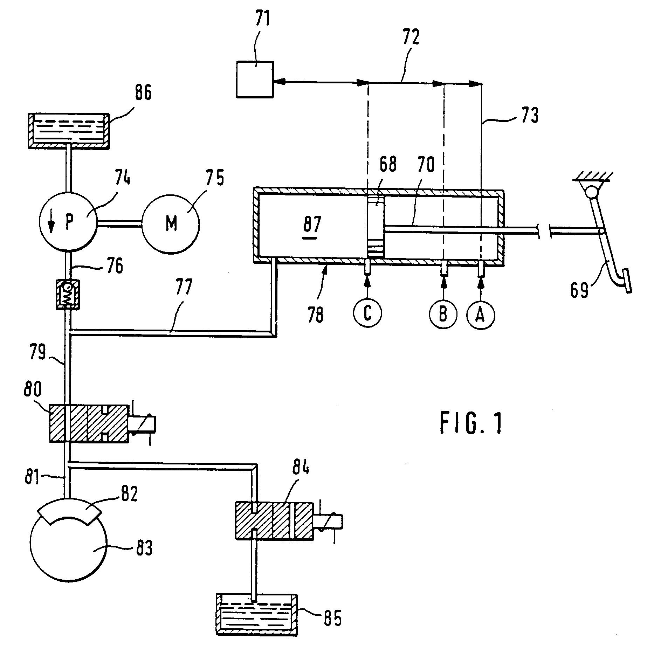

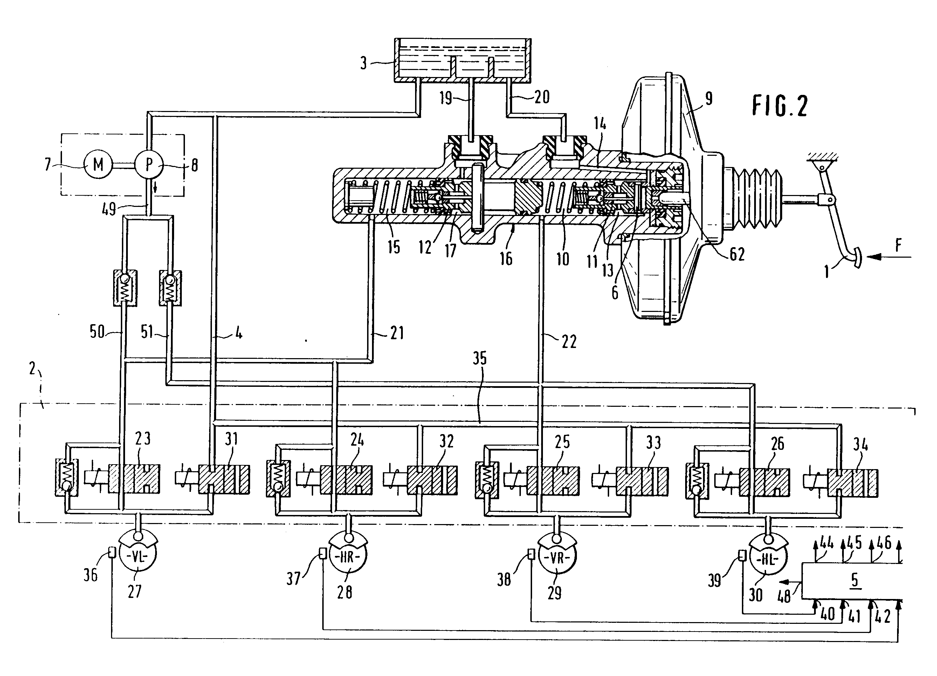

Die Figuren 1 und 2 zeigen Vorrichtung und Komponenten, deren Aufbau und Arbeitsweise teilweise der oben zitierten älteren Deutschen Patentanmeldung entnommen sind. Die Ausführungsbeispiele nach den Figuren 3, 4 und 5 gehen von dem in den Figuren 1 und 2 beschriebenen Stand der Technik aus. Eine Erläuterung der Figuren 1 und 2 ist daher zum Verständnis der Ausführungsbeispiele gemäß Fig. 3, 4 und 5 notwendig.

In Figur 1 ist schematisch ein Hauptzylinder mit einem Kolben dargestellt. Gezeigt ist ein Monohauptzylinder. Bei einem Tandemhauptzylinder gelten die nachfolgend geschilderten Sachverhalte in entsprechender Weise für den Druckstangenkolben.

Der Kolben 68 wird im Normalbremsmodus durch das Bremspedal 69 und die Kolbenstange 70 aus der Ruhelage A nach links bewegt. Mit 71,72,73 sind in Figur 1 Komponenten einer Sensiervorrichtung dargestellt, die die Positionen, die Bewegungsrichtung und die Geschwindigkeit des Kolbens 68 feststellt und als elektrische Sensorsignale an einen elektrischen Regler, der in der älteren Deutschen Patentanmeldung beschrieben ist, weitergibt. Weitere Einzelheiten der Sensiervorrichtung sind der älteren Deutschen Patentanmeldung zu entnehmen.

In Figur 1 sind drei Positionen A,B,C, des Kolbens dargestellt, die von der Sensiervorrichtung erfaßt werden.

Die Position A ist die rechte Endstellung des Kolbens. Die Position B ist die regelungstechnisch angestrebte Soll-Stellung des Kolbens während des Antiblockierregelmodus. Position C ist die linke Endstellung des Kolbens.

Mit 74 ist eine hydraulische Pumpe bezeichnet, die vom elektrischen Motor 75 angetrieben wird. Die Pumpe hat ein veränderbares Fördervolumen. Die Veränderung des Fördervolumens kann mit elektrischen Mitteln erfolgen, wie dies beispielsweise im Rahmen der Beschreibung der älteren Deutschen Patentanmeldung dargestellt wird. Es kann aber auch eine Steuerung des Fördervolumens mit mechanischen Mitteln erfolgen, wie dies anhand der Ausführungsbeispiele der zitierten Anmeldung erläutert wird. Schließlich kann eine Steuerung des Fördervolumens der Pumpe durch Betätigung einer oder mehrerer Kupplungen erfolgen, die zwischen dem Antriebsmotor und der Pumpe oder die innerhalb der Pumpe angeordnet sind und die von den Ausgangssignalen des elektronischen Reglers geschaltet werden.

Die Pumpe 74 ist durch die Leitungen 76,77 mit dem Hauptzylinder 78 und durch die Leitungen 76,79 mit dem Einlaßventil 80 und durch die Leitung 81 mit dem Radzylinder 82 der Radbremse 83 verbunden.

Der Radzylinder 82 ist durch ein Auslaßventil 84 während des Antiblockierregelmodus zeitweise, und zwar wie vom Regelalgorithmus diktiert, mit einem drucklosen Vorratsbehälter 85 verbindbar. Der Vorratsbehälter 85 und der pumpenansaugseitige Vorratsbehälter 86 können baulich eine Einheit bilden.

Das Einlaßventil 80 und das Auslaßventil 84 sind elektromagnetisch schaltbare Ventile. Das Einlaßventil ist bei Stromlosigkeit des Betätigungsmagneten offen. Es wird daher als Stromlos-Offen-Ventil" oder "SO-Ventil" bezeichnet. Das Auslaßventil ist bei Stromlosigkeit des Betätigungsmagneten gechlossen. Es wird daher als "Stromlos-Geschlossen-Ventil" oder "SG-Ventil" bezeichnet. Die Schaltung dieser Ventile erfolgt durch Ausgangssignale des elektronischen Reglers, der in der zitierten älteren Patentanmeldung beschrieben ist.

Im elektronischen Regler ist ein Regelalgorithmus gespeichert, der, wie weiter unten noch genauer erläutert werden wird, das Schalten der SO- und SG-Ventile bestimmt. Durch die Schaltungen der SO- und SG-Ventile werden die für den Antiblockierregelmodus wichtigen Phasen: Druckabbau, Druckkonstanthaltung und Wiederaufbau des Drucks im Radzylinder durchgeführt.

Druckabbau wird erreicht durch Schließen des Einlaßventils und Öffnen des Auslaßventils. Druckkonstanthaltung wird erzielt durch Schließen des Einlaßventils und Geschlossenhalten des Auslaßventils. Druckaufbau wird erreicht durch ein offenes Einlaßventil und ein geschlossenes Auslaßventil.

Während der Phase des Druckabbaus wird regelungsbedingt aus dem Leitungssystem und aus dem Hauptzylinder, der am Leitungssystem angeschlossen ist, Volumen entnommen, das durch das offene SG-Ventil abfließt. Das abfließende Volumen kann so groß sein, daß die Förderleistung der Pumpe nicht ausreicht, um das abfließende Volumen zu kompensieren. Der Kolben und das mit dem Kolben verbundene Bremspedal werden unter der Wirkung der Pedalkraft in unerwünschter Weise nach links bewegt. Im Extremfall kann das Bremspedal "durchfallen". Der Kolben steht dann in der in Figur 1 dargestellten linken Endstellung C.

Die Sensiervorrichtung erfaßt die Ist-Position des Kolbens und, wie bereits erwähnt, seine Bewegungsrichtung und seine Geschwindigkeit. Über eine Signalleitung werden diese Informationen dem elektronischen Regler als Eingangssignale mitgeteilt. Nach Verarbeitung dieser Eingangssignale stellt der elektronische Regler Ausgangssignale zur Verfügung für die Steuerung des Fördervolumens der Pumpe 74. Die Steuerung des Fördervolumens kann, wie erwähnt, elektrisch über den elektrischen Antrieb erfolgen oder mit Hilfe von mechanischen Mitteln.

Das so eingeregelte, erhöhte Fördervolumen gelangt während des Regelmodus zumindest teilweise durch die Leitung 77 in den Druckraum 87 des Hauptzylinders. Hierdurch wird der Kolben aus seiner Ist-Stellung, beispielsweise der unerwünschten Endstellung C, in die gewünschte Soll-Stellung B verschoben.

In entsprechender Weise kann, wenn dies zum Beispiel durch den Kunden, den Automobilhersteller, gewünscht wird, der Arbeitskolben aus der extrem rechten Position, Position A, in die gewünschte mittlere Position, Position B, gebracht werden. Hierzu ist das Fördervolumen entsprechend zu reduzieren. Auch hier werden von der Sensiervorrichtung entsprechende elektrische Signale an den elektronischen Regler weitergegeben. Dieser verarbeitet die Signale aufgrund eines, den Wünschen des Kunden angepaßten, Regelalgorithmus zu Stellsignalen für die Fördermenge der Pumpe.

Wie aus der vorangegangenen Beschreibung ersichtlich, handelt es sich um einen kreisförmigen Wirkungsablauf im Sinne eines Regelkreises. Die Sensiervorrichtung ist das Meßglied des Regelkreises, das am Ende der Regelstrecke: Pumpe/Hauptzylinderkolben angeordnet ist. Die Sensorsignale sind regelungstechnisch Eingangssignale einer Regeleinrichtung, die im vorliegenden Fall als elektronischer Regler ausgeführt ist. In dieser Regeleinrichtung ist eine regelungstechnische Führungsgröße in Form eines Regelalgorithmus zur Erzielung einer Soll-Stellung des Kolbens installiert. Die Verarbeitung der Eingangssignale gemäß dem Algorithmus führt zu Stellgrößen am Ausgang der Regeleinrichtung.

Diese Stellgrößen beziehungsweise Ausgangssignale stellen das Fördervolumen ein, das zur Positionierung des Kolbens in der Soll-Stellung notwendig ist. Die Pumpe ist mit ihrem variablen Fördervolumen regelungstechnisch als ein Stellglied anzusehen.

Der beschriebene Regelkreis sorgt also für ein Gleichgewicht zwischen dem Volumen, das aus dem Druckraum des Hauptzylinders abfließt, und der Fördermenge der Pumpe.

Aus dem Vorangegangen ist erkennbar, daß die Stellung des Arbeitskolbens im Hauptzylinder als ein Indiz für das ordnungsgemäße oder fehlerhafte Arbeiten des gesamten Antiblockierregelsystems ausgenutzt werden kann.

Neben der von der Sensiervorrichtung festgestellten Ist-Position sind auch die von der Sensiervorrichtung festgestellten Bewegungstendenzen des Kolbens nach links oder rechts und die von der Sensiervorrichtung festgestellten Geschwindigkeiten des Kolbens Indizien für ein ordnungsgemäßes oder fehlerhaftes Arbeiten des Antiblockiersystems. Eine Bewegung des Kolbens nach links bedeutet beispielsweise, daß ein Defekt vorhanden sein kann. Eine schnelle Bewegung nach links kann bedeuten, daß es sich um einen größeren Defekt, beispielsweise um einen Rohrbruch oder um eine unerwünschte Drosselung des Flüssigkeitsstroms pumpenausgangsseitig handelt.

Mit der Erfindung wird ein einfaches, kostengünstiges, kurz bauendes Bremskraftverstärker-Hauptzylinder-Aggregat mit Sensiervorrichtung vorgeschlagen, das die oben geschilderten Aufgaben erfüllt.

Insbesondere wird durch die Anbringung der Sensiervorrichtung die Baulänge des Aggregats nicht vergrößert.

Die Ausführungsbeispiele der Erfindung nach den Figuren 3 und 4 und 5 gehen aus von einer Antiblockiervorrichtung, die mit einem Unterdruck-Bremskraftverstärker versehen ist, siehe Figur 2.

Die Vorrichtung gemäß Figur 2 umfaßt folgende Aggregate: einen vom Bremspedal 1 betätigten Unterdruck-Bremskraftverstärker 9, einen Tandemhauptzylinder 16, einen Modulator 2 für die Druckregelung im Antiblockiermodus, einen elektronischen Regler 5 zur Verarbeitung von Sensorsignalen und eine Hydraulikpumpe 8, die von einem Elektromotor 7 angetrieben wird.

In Figur 2 ist die Bremsanlage in Lösestellung gezeigt. Die Druckkammern 10,15 des Hauptzylinders sind in bekannter Weise über offene Zentralregelventile, über Anschlußkanäle im Innern der Kolben sowie über eine Ringkammer im Zwischenkolben, über Bohrungen und über hydraulische Leitungen 19,20 mit dem Druckmittelvorratsbehälter 3 verbunden.

Die beiden Druckkreise 21,22 des Hauptzylinders sind über elektromagnetisch betätigbare, in der Grundstellung auf Durchlaß geschaltete Ventile, sogenannte "Stromlos-Offen-Ventile" (SO-Ventile) oder Einlaßventile 23,24,25,26 mit den Radbremsen 27,28,29,30 verbunden.

Die parallel geschalteten Radbremsen 27,28 bzw. 29,30, sind den diagonal angeordneten Druckkreisen (Bremskreisen) 21,22 zugeordnet.

Für die Anordnung der zu den genannten Bremsen korrespondierenden Fahrzeugrädern wurden folgende Kurzbezeichnungen benutzt: VL für vorn links, HR für hinten rechts, VR für vorn rechts, HL für hinten links.

Die Radbremsen 27,28,29,30 sind außerdem über elektromagnetisch betätigbare, in der Grundstellung sperrende Ausgangsventile 31,32,33,34 sogenannte "Stromlos-Geschlossene-Ventile" (SG-Ventile), über eine hydraulische Rückflußleitung 35, und über die Leitung 4 an den Vorratsbehälter oder Druckausgleichsbehälter 3 anschließbar.

Die Fahrzeugräder sind mit Sensoren 36,37,38,39 ausgerüstet, die mit synchron zur Radumdrehung mitlaufenden Zahnscheiben zusammenwirken und elektrische Signale erzeugen, die das Raddrehverhalten, das heißt die Radumfangsgeschwindigkeit und Änderugnen dieser Geschwindigkeit, erkennen lassen. Diese Signale werden über die Eingänge 40,41,42,43 dem elektronischen Regler 5 zugeführt.

Der elektronische Regler verarbeitet die Sensorsignale aufgrund eines in ihm gespeicherten Regelalgorithmus zu Ausgangssignalen (Bremsdrucksteuersignale), mit denen im Bremsdruckregelmodus, die SO-Ventile und SG-Ventile geschaltet werden, wodurch in den einzelnen Radzylindern der Scheibenbremsen entsprechend dem Regelalgorithmus die Bremsdrücke abgebaut, konstant gehalten oder wieder erhöht werden. Über die Ausgänge 44,45,46,47 des elektronischen Reglers werden hierzu die Betätigungsmagnete der SO-Ventile angesteuert. Die elektrischen Verbindungsleitungen zwischen den Ausgängen 44,45,46,47 und den Wicklungen der SO- und SG-Ventile sind in den Figuren nicht dargestellt.

Im Bremsdruckregelmodus wird der Elektromotor 7 der Pumpe 8 in Betrieb gesetzt. Das Einschaltsignal erhält der Motor vom Ausgang 48 des elektronischen Reglers 5. Die Pumpe baut im Regelmodus Druck in den Druckleitungen 49,50,51 auf. Diese Leitungen stellen eine Druckmittelführung dar, die mit der Druckmittelführung des Tandemhauptzylinders, in Form der Druckleitungen 21,22 verbunden ist. Im Regelmodus werden also die Druckräume 10,15 des Tandemhauptzylinders durch die Pumpe unter Druck gesetzt. Bei Bremsbetätigung im Normalbremsmodus wird die Pedalkraft F, unterstützt durch den Unterdruck im Verstärker 9, auf die Hauptzylinderkolben übertragen. Die zentralen Regelventile in diesen Kolben schließen, so daß sich nunmehr in den Druckräumen 10,15 und damit in den Bremskreisen 21,22 Bremsdruck aufbauen kann, der über die SO-Ventile 23,24,25,26 zu den Radbremszylindern gelangt.

Wird nun mit Hilfe der Sensoren 36,37,38,39 und des elektronischen Reglers 5 eine Blockiertendenz an einem oder mehreren Rädern erkannt, setzt der Antiblockierregelmodus ein. Der Antriebsmotor 7 der Pumpe 8 schaltet sich ein, wodurch in den Druckleitungen 49,50,51 Druck aufgebaut wird, der einerseits über die SO-Ventile auf die Radzylinder der Radbremsen einwirkt und andererseits die Druckräumen des Hauptzylinders mit Druck, wie dargestellt, beaufschlagt. Entsprechend dem Regelalgorithmus führen weitere Signale des elektronischen Reglers zur Umschaltung der elektromagnetisch betätigten SO- und SG-Ventile.

Infolge des Pumpendrucks in den Arbeitsräumen 10 und 15 werden die Arbeitskolben 11 und 12 in der Figur 1 nach rechts verschoben. Der Druckstangenkolben 11 fährt bei den Bremskraftverstärkern des Standes der Technik bis an seinen rechten Anschlag 6 (Figur 2). Dadurch wird das Bremspedal 1 zurückgestellt, es nimmt seine Grundposition ein. Der Fuß des Fahrers tritt also gegen ein zurückgestelltes Pedal. In dieser Position öffnen die Zentralventile des Druckstangenkolbens 11 und des Zwischenkolbens 12. Druckmittel kann über diese Zentralventile in an sich bekannter Weise über die Rückflußleitungen 19 und 20 in den Vorratsbehälter 3 zurückfließen.

Beim Zwischenkolben geschieht dies über den drucklosen Ringraum 17 des Zwischenkolbens. Beim Druckstangenkolben geschieht dies über den drucklosen Nachlaufraum 13, die Nachlaufbohrung 14 in die Rückflußleitung 20.

Während des gesamten Regelmodus werden die Arbeitskolben in der Grundposition gehalten. Ebenso wird das Bremspedal während des gesamten Regelmodus in seiner Ausgangsposition gehalten.

Dies soll durch die Erfindung und damit durch die Gegenstände der Ausführungsbeispiele gemäß Figuren 3,4 und 5 vermieden werden. Der Druckstangenkolben soll während des ABS-Regelmodus in die Sollposition B der Figur 1 gebracht werden.

Diese Soll-Position liegt in den Hauptzylinder hinein verlagert vor der Position A. Damit wird erreicht, daß auch das Bremspedal vor seiner Ausgangsposition während des Regelmodus positioniert ist.

Figur 3 zeigt eine Vorrichtung zur Sensierung des Druckstangenkolbens und zur Betätigung eines Schalters. Bei Betätigung des Schalters wird ein elektrisches Signal an den elektronischen Regler der ABS-Vorrichtung gegeben. Durch den Regler wird die Drehzahl des Antriebsmotors für die Pumpe und damit die Pumpenförderleistung aufgrund des Schaltersignals und entsprechend dem im Regler installierten Regelalgorithmus geregelt. Es kann auch vorgesehen sein, daß der Regler aufgrund des Schaltersignals und entsprehend dem Regelalgorithmus den Antriebsmotor ein- und ausschaltet, um das Fördervolumen der Pumpe zu variieren.

Die Vorrichtung zur Sensierung des Druckstangenkolbens und zur Betätigung des Schalters besteht im wesentlichen aus einem Bowdenzug und einem Schaltnocken, wobei die Seele des Bowdenzugs durch den Membranteller des Unterdruckbremskraftverstärkers gezogen wird.

Aus Fig. 3 geht im einzelnen hervor, daß am Membranteller 52 die Seele 53 des Bowdenzugs 54 befestigt ist. Der Bowdenzug ist durch den Körper 55 vakuumdicht am Verstärkerzylinder 56 des Unterdruckbremskraftverstärkers angebracht.

Wird das Bremspedal betätigt, dann verschiebt sich die Kolbenstange 57 in Richtung des Pfeils 58. Das bekannte Unterdrucksteuerventil, das in seiner Gesamtheit mit 59 bezeichnet ist, erzeugt eine Druckdifferenz zwischen den Räumen 60,61. Durch diese Druckdifferenz bewegt sich der Membranteller in Richtung des Pfeiles 62,63 nach links. Dabei wird die Seele des Bowdenzugs in das Bremskraftverstärkergerät gezogen. Am Ende der Seele 53 ist ein Schaltnocken 64 mit einer Schaltrampe 88 befestigt. Der Schaltnocken wird in Richtung des Pfeils 65 entgegen der Wirkung der Rückstellfeder 66 bewegt. Nach Überwindung der Wegstrecke 67 läuft der Schaltnocken gegen den Endschalter 18 und betätigt diesen. Durch den Schalter wird, wie oben beschrieben, ein elektrisches Signal ausgelöst, das an den elektronischen Regler der ABS-Vorrichtung weitergeleitet wird.

Der elektronische Regler verarbeitet dieses Schaltersignal zu einem Ausgangssignal. Mit Hilfe des Ausgangssignals wird entweder die Drehzahl des Antriebsmotor der Pumpe geregelt, oder der Antriebsmotor wird ein- und ausgeschaltet.

Hierdurch werden die gewünschte Variation der Förderleistung der Pumpe und damit die gewünschte Positionsierung des Druckstangenkolbens, siehe Beschreibung zu der Figur 1, erreicht. Die Rückstellfeder 66 sorgt dafür, daß der Bowdenzug immer gespannt bleibt.

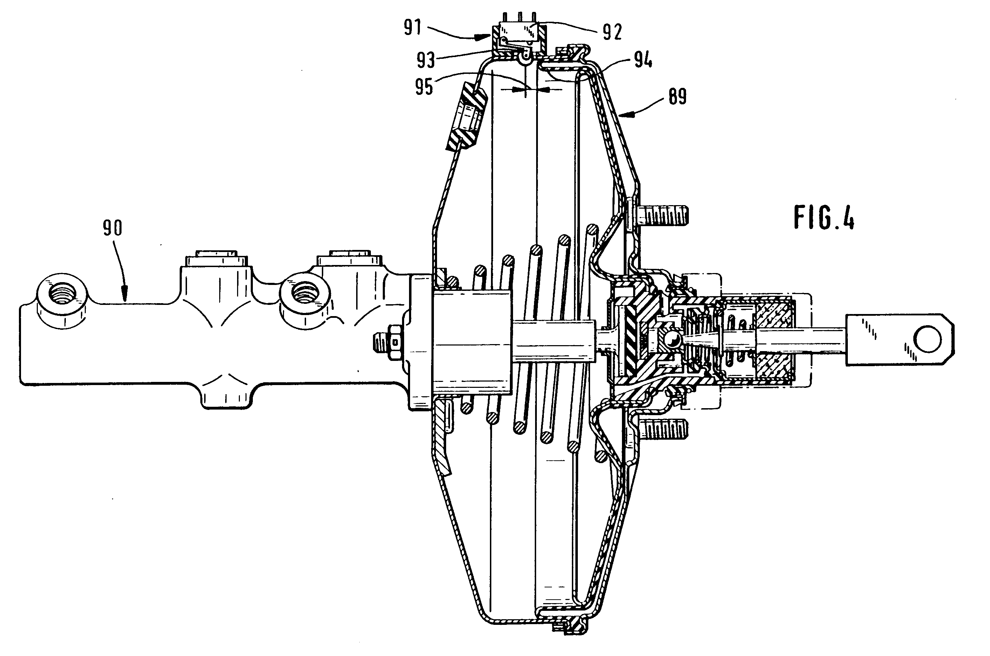

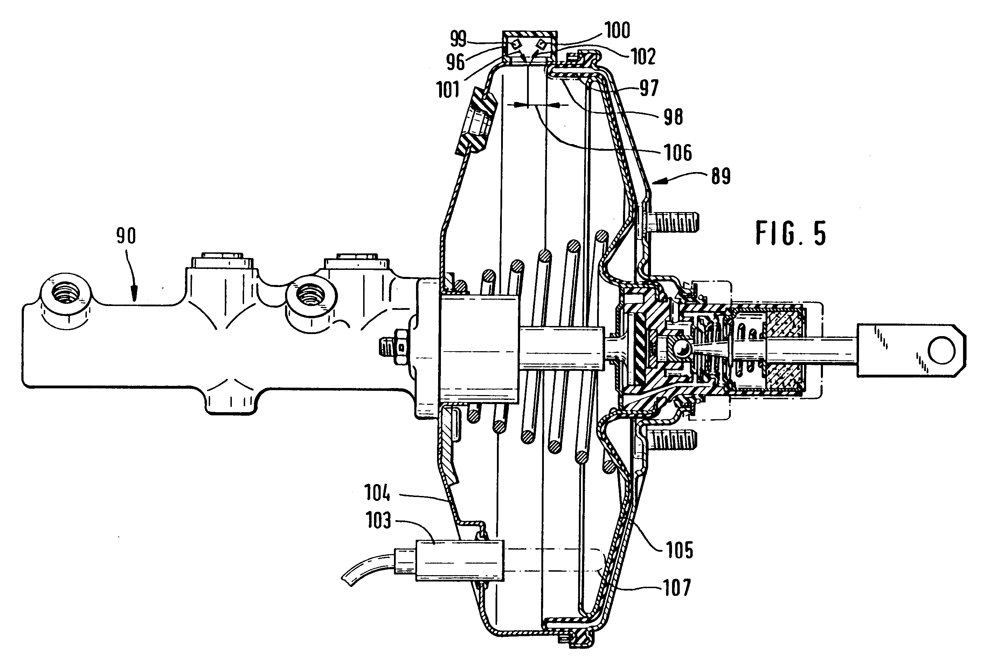

In den Figuren 4 und 5 ist ein Unterdruckbremskraftverstärker 89 und ein Tandemhauptzylinder 90 dargestellt. Es gehört zur Aufgabe der Erfindung, dieses Aggregat, bestehend aus Verstärker und Hauptzylinder, mit einem Wegschalter für die Hilfspumpe zu versehen, ohne, daß das die bauliche Länge des Gesamtaggregats vergrößert wird.

Der Wegschalter wird betätigt, wenn der Membranteller eine vorbestimmte Wegstrecke zurückgelegt hat. Bei Betätigung des Wegschalters erzeugt dieser ein Eingangssignal für den elektronischen Regler der Antiblockiervorrichtung. Nach Verarbeitung dieses Eingangssignals stellt der elektronische Regler Schaltsignale für den Pumpenantrieb zur Verfügung.

Durch das Fördervolumen der Pumpe werden ein oder beide Arbeitskolben des Hauptzylinders und damit, wie anhand des Standes der Technik, siehe oben, erläutert, das Bremspedal vor seiner Ruhestellung positioniert. In Fig. 4 ist in einer vakuumdichten Vorrichtung 91 ein Mikroschalter 92 untergebracht, der mit einem Rollenhebel 93 zusammenwirkt. Wenn die Rollmembran 94 bei Betätigung des Bremskraftverstärkers sich nach links bewegt, wird sie den Rollenhebel 93 betätigen. Der Rollenhebel 93 tastet also die Position der Rollmembran 94 und damit die Position des Druckstangenkolbens und die Position des Bremspedals, das mit dem Druckstangenkolben wirkungsmäßig verbunden ist, ab.

Die Rollmembran wird mit dem eingesteuerten Atmosphärendruck in bekannter Weise gegen das Gehäuse und in Fig. 4, nach Überwindung der Strecke 95, gegen die Rolle des Rollenhebels gedrückt. Der Rollenhebelschalter kann auf die Soll-Position, z.B. 25% Betätigungsweg, einjustiert werden. In dieser Stellung wird das Brempedal während des Antiblockierregelmodus positioniert.

Im Ausführungsbeispiel nach Fig. 5 oben, wird eine Reflexlichtschranke benutzt, die in dem vakuumdicht angebrachten Gehäuse 86 untergebracht ist. Die Rollmembran 97 ist mit einer Reflexfolie 98 oder mit einem Farbpunkt versehen, die, bzw. der, das Licht des Senders der Reflexlichtschrankenvorrichtung reflektiert.

Die Position der Rollmembran wird also berührungslos abgetastet. Anstelle der Lichtschranken können auch andere Arten von Sensoren eingesetzt werden, so beispielsweise ein induktiver oder kapazitiver Sensor.

Im einzelnen ist in dem Gehäuse 96 ein Lichtsender 99 untergebracht und ein Lichtempfänger 100. Der Pfeil 101 bezeichnet die Lichtemission. Der Pfeil 102 bezeichnet das reflektierte Licht. Mit der strichpunktierten Linie 98 ist die Reflexfolie weidergegeben. Wenn die Rollmembran über die Strecke 106 abgerollt ist, findet eine Reflexion des Lichtes und damit ein Schaltvorgang statt.

Mit 103 ist in Fig. 5 unten ein Näherungssensor bezeichnet, der induktiver oder kapazitiver Art sein kann. Er ist in der Gehäusewandung 104 des Unterdruckbremskraftverstärkers befestigt. Seine Aufgabe besteht darin, die Position des Membranteller 105 abzutasten. Der Schaltpunkt für das Einschalten der Pumpe kann durch Verändern der Einbauposition des Näherungssensors 103 eingestellt werden, oder auf elektronische Weise durch Veränderung der Empfindlichkeit des Sensors. Grundsätzlich können auch andere Sensor- und Schalterarten verwendet werden. So ist schematisch in Fig. 5 ein mechanischer Grenztaster oder Wegschalter 107 wiedergegeben, der durch den Membranteller 105 betätigbar ist.

Der Näherungssensor induktiver Art kann als induktiver Näherungsschalter ausgebildet sein. Das an sich bekannte Funktionsprinzip des induktiven Näherungsschalters beruht auf der Störung eines elektromagnetischen Wechselfeldes durch einen in das Wechselfeld gebrachten Metallgegenstand, hier ist es der Membranteller 105.

Der Näherungssender kapazitiver Art kann als kapazitiver Näherungsschalter ausgebildet sein, seine Funktion beruht auf der Störung der Kapazität eines Kondensators. Bringt man einen Gegenstand in das elektrische Feld des Kondensators, so wird durch die Störung der Kapazität ein Schaltvorgang ausgelöst.

### Bezugszeichenliste

- 1: Bremspedal
- 2: Modulator
- 3: Vorratsbehälter
- 4: Rücklaufleitung
- 5: elektronischer Regler
- 6: Anschlag
- 7: Elektromotor
- 8: Pumpe
- 9: Vakuumbremskraftverstärker
- 10: Druckraum
- 11: Arbeitskolben
- 12: Arbeitskolben
- 13: Nachlaufraum
- 14: Nachlaufbohrung
- 15: Druckraum
- 16: Tandemhauptzylinder
- 17: Ringraum
- 18: Schalter
- 19: hydraulische Leitung
- 20: hydraulische Leitung
- 21: Druckkreis
- 22: Druckkreis
- 23: SO-Ventil
- 24: SO-Ventil
- 25: SO-Ventil
- 26: SO-Ventil
- 27: Radbremse
- 28: Radbremse
- 29: Radbremse
- 30: Radbremse
- 31: SG-Ventil
- 32: SG-Ventil
- 33: SG-Ventil
- 34: SG-Ventil
- 35: Rückflußleitung
- 36: Sensor
- 37: Sensor
- 38: Sensor
- 39: Sensor
- 40: Eingang
- 41: Eingang
- 42: Eingang
- 43: Eingang
- 44: Ausgang
- 45: Ausgang
- 46: Ausgang
- 47: Ausgang
- 48: Ausgang
- 49: Druckleitung
- 50: Druckleitung
- 51: Druckleitung
- 52: Membranteller
- 53: Seele
- 54: Bowdenzug
- 55: Körper
- 56: Gehäuse
- 57: Kolbenstange
- 58: Pfeil
- 59: Ventil
- 60: Raum
- 61: Raum
- 62: Pfeil
- 63: Pfeil
- 64: Schaltnocken
- 65: Pfeil
- 66: Feder
- 67: Wegstrecke
- 68: Kolben
- 69: Bremspedal
- 70: Kolbenstange
- 71: Komponente der Sensiervorrichtung
- 72: Komponente der Sensiervorrichtung
- 73: Komponente der Sensiervorrichtung
- 74: Pumpe
- 75: Motor
- 76: Leitung
- 77: Leitung
- 78: Hauptzylinder
- 79: Leitung
- 80: Einlaßventil
- 81: Leitung
- 82: Radzylinder
- 83: Radbremse
- 84: Auslaßventil
- 85: Vorratsbehälter
- 86: Vorratsbehälter
- 87: Druckraum
- 88: Schaltrampe
- 89: Verstärker
- 90: Tandemhauptzylinder
- 91: Vorrichtung
- 92: Mikroschalter
- 93: Rollenhebel
- 94: Rollmembran
- 95: Strecke
- 96: Gehäuse
- 97: Rollmembran
- 98: Folie
- 99: Sender
- 100: Empfänger
- 101: Pfeil
- 102: Pfeil
- 103: Näherungssensor
- 104: Wandung
- 105: Membranteller
- 106: Strecke
- 107: mechanischer Grenzschalter, Wegschalter
- A: Position
- B: Position
- C: Position

## Patentansprüche

1. Antiblockierregelvorrichtung (ABS-Vorrichtung), für Kraftfahrzeuge mit einem Hauptzylinder (16), mit Radzylindern (27 - 30), mit mindestens einer Pumpe (18) zur Positionierung mindestens eines Kolbens (11,12) des Hauptzylinders (16), mit einem Druckmodulator (2), der den Druck in den Radzylindern (27 - 30) während des Regelmodus moduliert, und einem elektronischen Regler (5), der Radsensorsignale zu Stellsignalen für die Durchlaß- (23 - 26) und Sperrventile (31 - 34) des Druckmodulators (2) verarbeitet, mit einem Bremskraftverstärker (9), bestehend aus Verstärkerzylinder (56) und Verstärkerkolben (52), wobei der Verstärkerkolben (52) in Wirkverbindung steht mit dem Bremspedal (1), dadurch **gekennzeichnet,** daß ein Zugkraft übertragendes Element (54), vorgesehen ist, der mit dem Verstärkerkolben (52) verbunden ist und einen Schalter (18) betätigt, der die Pumpe (8) über den elektronischen Regler (5), steuert.

2. Antiblockierregelvorrichtung nach Anspruch 1, dadurch **gekennzeichnet,** daß die Pumpe (8) durch einen elektrischen Antriebsmotor (7) antreibbar ausgebildet ist, dessen Drehzahl durch den Schalter (18) steuerbar ist.

3. Antiblockierregelvorrichtung nach Anspruch 1 oder 2, dadurch **gekennzeichnet,** daß die Pumpe (8) durch einen elektrischen Antriebsmotor (7) antreibbar ausgebildet ist, der durch den Schalter (18) ein- und ausschaltbar ist.

4. Antiblockierregelvorrichtung nach einem oder mehreren der vorangegangenen Ansprüche, dadurch **gekennzeichnet,** daß der Schalter (18) als Endschalter ausgebildet ist, der die Pumpe (8) einschaltet, nachdem der Verstärkerkolben (52) eine bestimmte Strecke in Richtung Bremsbetätigung zurückgelegt hat.

5. Antiblockierregelvorrichtung nach einem oder mehreren der vorangegangenen Ansprüche 1 bis 4, wobei der Verstärkerkolben durch einen Membranteller, der durch eine Membran mit dem Gehäuse bewegbar verbunden ist, gebildet ist, dadurch **gekennzeichnet,** daß das Element als ein Bowdenzug (54) ausgebildet ist, dessen Seele (53) am Membranteller (52) befestigt ist.

6. Antiblockierregelvorrichtung nach einem oder mehreren der vorangegangenen Ansprüche, dadurch **gekennzeichnet,** daß der Schalter (18) durch einen von der Seele (53) des Bowdenzugs (54) bewegbaren Körper (64) betätigbar ist, der eine Schaltrampe (88) aufweist, die nach Überwindung einer bestimmten Strecke (67) den Schalter (18) betätigt.

7. Antiblockierregelvorrichtung (ABS-Vorrichtung), für Kraftfahrzeuge mit einem Hauptzylinder (90), mit Radzylindern, mit mindestens einer Pumpe zur Positionierung mindestens eines Kolbens des Hauptzylinders (90), mit einem Druckmodulator, der den Druck in den Radzylindern während des Regelmodus moduliert, und einem elektronischen Regler, der Radsensorsignale zu Stellsignalen für die Durchlaß- und Sperrventile des Druckmodulators verarbeitet, mit einem Bremskraftverstärker (9), bestehend aus Verstärkerzylinder (56) und Verstärkerkolben (52), wobei der Verstärkerkolben (52) in Wirkverbindung steht mit dem Bremspedal (1) steht und einen Membranteller sowie eine Rollmembran (94) umfaßt, die den Verstärkerkolben (52) und den Verstärkerzylinder (56) abdichtend miteinander verbindet, und Bewegungen des Verstärkerkolbens (52) relativ zum Verstärkerzylinder zuläßt, dadurch **gekennzeichnet,** daß der Verstärkerzylinder (56), Membranteller und die Rollmembran (94), als Teile eines Wegschalters für die Steuerung der Pumpe, über den elektronischen Regler, ausgebildet sind.

8. Antiblockierregelvorrichtung nach Anspruch 7, dadurch **gekennzeichnet,** daß im Verstärkerzylinder (56) ein mechanischer Grenztaster mit Rollenhebel (93), vorgesehen ist, der von der Rollmembran (94) betätigbar ist und ein elektrisches Signale für die Steuerung der Pumpe auslöst.

9. Antiblockierregelvorrichtung nach Anspruch 7, dadurch **gekennzeichnet,** daß im Verstärkerzylinder (56) ein Magnetgrenztaster mit Reedkontakt, vorgesehen ist, der durch die mindestens in einem Teilbereich magnetisierte oder mit einem magnetisierten Material versehene Rollmembran (94) betätigtbar ist.

10. Antiblockierregelvorrichtung nach Anspruch 7, dadurch **gekennzeichnet,** daß im Verstärkerzylinder ein fotoelektrischer Schalter (96,99,100) vorgesehen ist, der von der Rollmembran (58) betätigbar ist.

11. Antiblockierregelvorrichtung nach Anspruch 10, dadurch **gekennzeichnet,** daß der fotoelektrische Schalter (96,99,100) als eine Lichtschranke ausgebildet ist.

12. Antiblockierregelvorrichtung nach Anspruch 11, dadurch **gekennzeichnet,** daß eine Reflexionslichtschrankenvorrichtung vorgesehen ist und daß die Rollmembran (97) zumindest teilweise als Reflektor (98) ausgebildet ist.

13. Antiblockierregelvorrichtung nach Anspruch 7, dadurch **gekennzeichnet,** daß im Verstärkerzylinder ein induktiver Sensor vorgesehen ist, der bei Annäherung der Rollmembran ein elektrisches Signal auslöst.

14. Antiblockierregelvorrichtung nach Anspruch 7, dadurch **gekennzeichnet,** daß im Verstärkerzylinder ein kapazitiver Sensor vorgesehen ist, der bei Annäherung der Rollmembran eine elektrisches Signal auslöst.

15. Antiblockierregelvorrichtung nach Anspruch 7, dadurch **gekennzeichnet,** daß im Verstärkerzylinder ein Näherungssensor (103) vorgesehen ist, der die Position des Membrantellers (105) abtastet.

16. Antiblockierregelvorrichtung nach Anspruch 7, dadurch **gekennzeichnet,** daß ein induktiver Näherungsschalter vorgesehen ist, der durch die Näherung des Membrantellers betätigbar ist.

17. Antiblockierregelvorrichtung nach Anspruch 7, dadurch **gekennzeichnet,** daß ein kapazitiver Näherungsschalter vorgesehen ist, der durch die Näherung des Membrantellers betätigbar ist.

18. Antiblockierregelvorrichtung nach Anspruch 7, dadurch **gekennzeichnet,** daß ein Wegschalter (107) vorgesehen ist, der durch den Membranteller (105) betätigbar ist.

## Claims

1. An anti-lock control device (ABS-device) for automotive vehicles comprising a master cylinder (16), wheel cylinders (27 to 30), comprising at least one pump (18) for positioning at least one piston (11, 12) of the master cylinder (16), comprising a pressure modulator (2) modulating the pressure in the wheel cylinders (27 to 30) during the control mode, and an electronic control unit (5) processing wheel sensor signals to form corrective signals for the opening valves (23 to 26) and shut-off valves (31 to 34) of the pressure modulator (2), comprising a brake power booster (9) composed of booster cylinder (56) and booster piston (52), the said booster piston (52) being in operative engagement with the brake pedal (1),
**characterized** in that an element (54) transmitting tractive force is provided which is coupled to the booster piston (52) and actuates a switch (18) controlling the pump (8) by way of the electronic control unit (5).

2. An anti-lock control device as claimed in claim 1,
**characterized** in that the pump (8) is adapted to be driven by an electric drive motor (7), the number of revolutions of which is controllable by the switch (18).

3. An anti-lock control device as claimed in claim 1 or 2,
**characterized** in that the pump (8) is adapted to be driven by an electric drive motor (7) which can be switched on and off by the switch (18).

4. An anti-lock control device as claimed in any one or more of the preceding claims,
**characterized** in that the switch (18) is designed as a limit switch which switches on the pump (8) after the booster piston (52) has covered a predetermined distance in the direction of brake application.

5. An anti-lock control device as claimed in any one or more of the preceding claims 1 to 4, the booster piston being formed by a diaphragm plate which is movably coupled to the housing by means of a diaphragm,
**characterized** in that the element is designed as a Bowden cable (54), the core (53) of which is attached to the diaphragm plate (52).

6. An anti-lock control device as claimed in any one or more of the preceding claims,
**characterized** in that the switch (18) is actuatable by a member (64) which is movable by the core (53) of the Bowden cable (54) and which includes a switching ramp (88) that actuates the switch (18) after a predetermined distance (67) has been covered.

7. An anti-lock control device (ABS-device) for automotive vehicles comprising a master cylinder (90), wheel cylinders, comprising at least one pump for positioning at least one piston of the master cylinder (90), a pressure modulator modulating the pressure in the wheel cylinders during the control mode, and comprising an electronic control unit processing wheel sensor signals to form corrective signals for the opening valves and shut-off valves of the pressure modulator, comprising a brake power booster (9) composed of booster cylinder (56) and booster piston (52), the said booster piston (52) being in operative engagement with the brake pedal (1) and comprising a diaphragm plate and a rolling diaphragm (94) which sealingly interconnects the booster piston (52) and the booster cylinder (56), and permits movements of the booster piston (52) in relation to the booster cylinder,
**characterized** in that the booster cylinder (56), diaphragm plate and the rolling diaphragm (94) are designed as component parts of a travel-responsive switch for the control of the pump by way of the electronic control unit.

8. An anti-lock control device as claimed in claim 7,
**characterized** in that a mechanic limit switch with roller-type lever (93) is provided in the booster cylinder (56) which is actuatable by the rolling diaphragm (94) and issues an electric signal for the control of the pump.

9. An anti-lock control device as claimed in claim 7,
**characterized** in that a magnetic limit switch with a Reed contact is provided in the booster cylinder (56) which is actuatable by the rolling diaphragm (94) that is magnetized or is furnished with a magnetized material at least in a section.

10. An anti-lock control device as claimed in claim 7,
**characterized** in that a photo-electric switch (96, 99, 100) is provided in the booster cylinder which is actuatable by the rolling diaphragm (58).

11. An anti-lock control device as claimed in claim 10,
**characterized** in that the photo-electric switch (96, 99, 100) is provided in the form of a light barrier.

12. An anti-lock control device as claimed in claim 11,
**characterized** in that a reflection light barrier arrangement is provided, and in that the rolling diaphragm (97) is designed as a reflector (98) at least in part.

13. An anti-lock control device as claimed in claim 7,
**characterized** in that an inductive sensor is arranged in the booster cylinder which issues an electric signal upon approach of the rolling diaphragm.

14. An anti-lock control device as claimed in claim 7,
**characterized** in that a capacitive sensor is arranged in the booster cylinder which issues an electric signal upon approach of the rolling diaphragm.

15. An anti-lock control device as claimed in claim 7,
**characterized** in that an approach sensor (103) is arranged in the booster cylinder which scans the position of the diaphragm plate (105).

16. An anti-lock control device as claimed in claim 7,
**characterized** in that an inductive approach switch is provided which is actuatable by the approach of the diaphragm plate.

17. An anti-lock control device as claimed in claim 7,
**characterized** in that a capacitive approach switch is provided which is actuatable by the approach of the diaphragm plate.

18. An anti-lock control device as claimed in claim 7,
**characterized** in that a travel-responsive switch (107) is provided which is actuatable by the diaphragm plate (105).

## Revendications

1. Dispositif de régulation antiblocage des roues (dispositif ABS) pour automobile comprenant un maître-cylindre de frein (16), des cylindres de roues (27 à 30), au moins une pompe (18) assurant le positionnement d'au moins un piston (11, 12) du maître-cylindre de frein (16), un modulateur (2) de pression, qui module la pression régnant dans les cylindres de roues (27 à 30) pendant le fonctionnement en mode de régulation, et comprenant un régulateur électronique (5), qui transforme des signaux des capteurs de roues en signaux de commande destinés aux valves (23 à 26) de passage et aux valves (31 à 34) d'arrêt du modulateur (2) de pression, et un amplificateur d'effort de freinage (9) composé d'un cylindre (56) d'amplificateur d'effort de freinage et d'un piston (52) d'amplificateur d'effort de freinage, le piston (52) de l'amplificateur d'effort de freinage étant en liaison d'action avec la pédale (1) de frein,
caractérisé en ce qu'un élément (54) transmetteur de force de traction est prévu, qui est relié au piston (52) de l'amplificateur d'effort de freinage et qui actionne un interrupteur (18) qui commande la pompe (8) par l'intermédiaire du régulateur électronique (5).

2. Dispositif de régulation antiblocage des roues selon la revendication 1, caractérisé en ce que la pompe (8) est réalisée de manière à pouvoir être entraînée par un moteur électrique (7) d'entraînement, dont le régime est réglable par l'intermédiaire de l'interrupteur (18).

3. Dispositif de régulation antiblocage des roues selon l'une des revendications 1 ou 2, caractérisé en ce que la pompe (8) est réalisée de manière à pouvoir être entraînée par un moteur électrique (7) d'entraînement, qui peut être mis en marche et arrêté par l'intermédiaire de l'interrupteur (18).

4. Dispositif de régulation antiblocage des roues selon l'une ou plusieurs des revendications précédentes, caractérisé en ce que l'interrupteur (18) est réalisé sous forme d'un interrupteur de fin de course, qui met la pompe (8) en marche lorsque le piston (52) d'amplificateur d'effort de freinage a parcouru une distance définie dans le sens d'actionnement des freins.

5. Dispositif de régulation antiblocage des roues selon l'une ou plusieurs des revendications précédentes 1 à 4, dans lequel le piston d'amplificateur d'effort de freinage est constitué par un plateau à membrane relié au carter de façon mobile par l'intermédiaire d'une membrane, caractérisé en ce que l'élément est réalisé sous forme d'un câble Bowden (54) dont l'âme (53) est fixée sur le plateau (52) à membrane.

6. Dispositif de régulation antiblocage des roues selon l'une ou plusieurs des revendications précédentes, caractérisé en ce que l'interrupteur (18) peut être actionné par l'intermédiaire d'un corps (64) pouvant être mis en mouvement par l'âme (53) du câble Bowden (54), ce corps présentant une rampe (88) de commande, qui actionne l'interrupteur (18) après avoir parcouru une certaine distance (67).

7. Dispositif de régulation antiblocage des roues (dispositif ABS) pour automobile comprenant un maître-cylindre de frein (90), des cylindres de roues, au moins une pompe assurant le positionnement d'au moins un piston du maître-cylindre de frein (90), un modulateur de pression, qui module la pression régnant dans les cylindres de roues pendant le fonctionnement en mode de régulation, et comprenant un régulateur électronique, qui transforme des signaux des capteurs de roue en signaux de commande destinés aux valves de passage et aux valves d'arrêt du modulateur de pression, un amplificateur d'effort de freinage (9) composé d'un cylindre (56) d'amplificateur d'effort de freinage et d'un piston (52) d'amplificateur d'effort de freinage, le piston (52) de l'amplificateur d'effort de freinage étant en liaison d'action avec la pédale (1) de frein et comprenant un plateau à membrane ainsi qu'une membrane (94) à déroulement, qui relie de façon étanche le piston (52) de l'amplificateur d'effort de freinage au cylindre (56) d'amplificateur d'effort de freinage et admet des déplacements relatifs du piston (52) d'amplificateur d'effort de freinage par rapport au cylindre d'amplificateur d'effort de freinage,
caractérisé en ce que le cylindre (56) d'amplificateur d'effort de freinage, le plateau à membrane et la membrane (94) à déroulement constituent des parties d'un interrupteur à commande proportionnelle à la course, assurant la commande de la pompe par l'intermédiaire du régulateur électronique.

8. Dispositif de régulation antiblocage des roues selon la revendication 7, caractérisé en ce qu'un palpeur mécanique de fin de course muni d'un levier (93) à galet est prévu dans le cylindre (56) d'amplificateur d'effort de freinage, ce palpeur pouvant être actionné par la membrane (94) à déroulement et déclenchant un signal électrique destiné à la commande de la pompe.

9. Dispositif de régulation antiblocage des roues selon la revendication 7, caractérisé en ce qu'un capteur magnétique de fin de course à contact Reed à lames souples est prévu dans le cylindre (56) d'amplificateur d'effort de freinage, qui peut être actionné par la membrane (94) à déroulement aimantée ou pourvue d'une matière magnétique au niveau d'une partie au moins de la membrane.

10. Dispositif de régulation antiblocage des roues selon la revendication 7, caractérisé en ce qu'un interrupteur photo-électrique (96, 99, 100) est prévu dans le cylindre d'amplificateur d'effort de freinage, cet interrupteur pouvant être actionné par la membrane (58) à déroulement.

11. Dispositif de régulation antiblocage des roues selon la revendication 10, caractérisé en ce que l'interrupteur photo-électrique (96, 99, 100) est réalisé sous forme d'un barrage photo-électrique.

12. Dispositif de régulation antiblocage des roues selon la revendication 11, caractérisé en ce qu'un dispositif de barrage photo-électrique à réflexion est prévu, et en ce que la membrane (97) à déroulement est réalisée en partie au moins comme un réflecteur (98).

13. Dispositif de régulation antiblocage des roues selon la revendication 7, caractérisé en ce qu'un capteur à induction est prévu dans le cylindre d'amplificateur d'effort de freinage, ce capteur déclenchant un signal électrique lors de l'approche de la membrane à déroulement.

14. Dispositif de régulation antiblocage des roues selon la revendication 7, caractérisé en ce qu'un capteur capacitif est prévu dans le cylindre d'amplificateur d'effort de freinage, ce capteur déclenchant un signal électrique lors de l'approche de la membrane à déroulement.

15. Dispositif de régulation antiblocage des roues selon la revendication 7, caractérisé en ce qu'un capteur de proximité (103) est prévu dans le cylindre d'amplificateur d'effort de freinage, ce capteur détectant la position du plateau (105) à membrane.

16. Dispositif de régulation antiblocage des roues selon la revendication 7, caractérisé en ce qu'un capteur de proximité à induction est prévu, qui peut être actionné par l'approche du plateau à membrane.

17. Dispositif de régulation antiblocage des roues selon la revendication 7, caractérisé en ce qu'un capteur capacitif de proximité est prévu, qui peut être actionné par l'approche du plateau à membrane.

18. Dispositif de régulation antiblocage des roues selon la revendication 7, caractérisé en ce qu'un interrupteur (107) à commande proportionnelle à la course est prévu, qui peut être actionné par le plateau (105) à membrane.
